# EUROPÄISCHE PATENTSCHRIFT

(11) **EP 1 704 005 B1**
(45) Veröffentlichungstag und Bekanntmachung des Hinweises auf die Patenterteilung: **15.08.2007**
(21) Anmeldenummer: 04701879.1
(22) Anmeldetag: 14.01.2004
(51) Int. Cl.: B22D 11/06

(54) **GIESSMASCHINE**
CASTING MACHINE
MACHINE DE COULEE

(43) Veröffentlichungstag der Anmeldung: 27.09.2006
(73) Patentinhaber: Lamec AG, 4565 Recherswill (CH)
(72) Erfinder: LAUENER, Wilhelm, Friedrich, CH-4563 Gerlafingen (CH); LAUENER, Martin, CH-4558 Winistorf (CH)
(74) Vertreter: Lusuardi, Werther
(86) Internationale Anmeldenummer: PCT/CH2004/000014
(87) Internationale Veröffentlichungsnummer: WO 2005/068108

(56) Entgegenhaltungen:
- EP-A- 0 798 060
- DE-A- 4 121 169
- GB-A- 1 388 378
- US-A- 4 794 978
- US-A- 5 645 122

## Beschreibung

Die Erfindung bezieht sich auf ein Raupengiessverfahren gemäss dem Oberbegriff des Patentanspruchs 1, auf eine Giessmaschine gemäss dem Oberbegriff des Patentanspruchs 4 sowie auf ein Verfahren zum Auswechseln der Blöcke einer Giessmaschine gemäss dem Patentanspruch 28.

Solche Maschinen dienen der kontinuierlichen Herstellung von Barren und Bändern, nachstehend Strang genannt, insbesondere aus Aluminium und dessen Legierungen, aber auch aus anderen Materialien, z.B. Zink, Kupfer, Messing und Stahl, wie auch aus nichtmetallischen Werkstoffen.

Diesbezügliche Verfahren und Vorrichtungen wurden schon im vorletzten und letzten Jahrhundert entwickelt. Es wird auf die Bücher von E. Hermann, "Handbuch des Stranggiessens", 1958, und "Handbook on Continuous Casting", 1980 (Aluminium Verlag Düsseldorf) verwiesen. Neben anderen Bauarten wurden somit auch Giessmaschinen konzipiert, bei welchen die Giessform, in welcher die Erstarrung der Schmelze erfolgt, durch, über die Breite der Giessform reichende, aneinandergereihte Metallblöcke gebildet werden.

Um die Reibung zwischen dem erstarrenden Giessgut und der Giessform möglichst gering zu halten, bewegen sich die Blöcke mit dem entstehenden Strang mit gleicher Geschwindigkeit bis an das Ende der Giessform, wo sie sich vom Strang abheben und über Kettenräder oder bogenförmige Laufbahnen auf die Rückseite des Maschinenkörpers und nach einer nochmaligen Umlenkung wieder an den Eintritt der Giessform geführt werden.

Die Blöcke können dabei entsprechend den erforderlichen Betriebsbedingungen aus antimagnetischem oder ferromagnetischem Material, vorzugsweise Kupfer oder Aluminium, wie auch Gusseisen oder Stahl bestehen.

Giessvorrichtungen dieser Art sind als sogenannte Raupengiessmaschinen bekannt und werden nach amerikanischer Terminologie "Machine with Caterpillar-Mold" und auch "Block-Caster" genannt.

Mittels eines Antriebes zirkulieren die Blöcke als endlose Raupen um einen Maschinenkörper, wobei eine Bauart zwei einander gegenüberliegende Maschinenkörper aufweist, welche so positioniert sind, dass die Distanz zwischen den in der Giessform einander zugewandten Wänden, unter Berücksichtigung der Schrumpfung der Schmelze bei deren Erstarrung, der Dicke des zu giessenden Stranges entspricht.

Eine andere Bauart unterscheidet sich dadurch, dass die Maschine nur einen von einer Raupe umfahrenen Maschinenkörper aufweist, wobei die Schmelze auf die Raupe gegossen wird, und auf dieser fortlaufend zu einem Strang erstarrt. Der erstarrende Strang wird dabei vorzugsweise mit einem Schutzgas bedeckt, um eine unzulässige Oxydation auf der freien Oberseite der erstarrenden Schmelze zu verhindern.

Die nachfolgende Beschreibung bezieht sich speziell auf Maschinen mit zwei einander gegenüberliegenden Maschinenkörpern und Raupen. Was die Bauart und die Funktion der Maschinenkörper und der Raupen betrifft, gilt die hernach beschriebene Neuheit auch für Maschinen mit nur einem Maschinenkörper mit umlaufender Raupe.

Beim Betrieb fliesst die in einem Ofen aufbereitete Schmelze durch eine Rinne in einen auf der Eintrittseite der Maschine angeordneten Trog, welcher sich über die Breite der Giessform erstreckt, und in welchem das Metallniveau durch einen geregelten Materialzufluss auf der erforderlichen Höhe gehalten wird. Von hier wird die Schmelze durch eine sogenannte Giessdüse in die Giessform geführt, welche auf der Eintrittseite durch die genannte Düse, auf der Austrittseite durch den erstarrten Strang und beidseitig durch sogenannte Seitendämme begrenzt wird. Die Giessrichtung kann dabei vertikal, horizontal oder geneigt sein.

Die Geschwindigkeit des aus der Giessform austretenden Stranges ist abhängig von Material und Dicke desselben wie auch von den physikalischen Eigenschaften des Blockmaterials und dessen Temperatur am Eintritt in die Giessform. Die für Raupengiessmaschinen übliche Dicke des Stranges liegt zwischen 1.5 und 3, vorzugsweise bei 2 cm. Die Geschwindigkeit des aus der Maschine austretenden Stranges muss den jeweiligen Verhältnissen entsprechend geregelt und angepasst werden und liegt normalerweise zwischen 2 und 12 m/min. Der entstandene Strang wird nach Verlassen der Maschine auf bekannte Art den weiteren Arbeitsprozessen zugeführt.

Beim Durchlaufen der Giessform nehmen die Blöcke im Kontakt mit dem Giessgut die aus diesem abzuführende Wärme auf und werden während des Laufes um den Maschinenkörper mittels eines wässerigen Kühlmittels gekühlt. Erfahrungsgemäss beträgt die Dicke der Blöcke, je nach der zu speichernden Wärmemenge, etwa das drei- bis fünffache des zu giessenden Stranges.

Bekannte Raupengiessmaschinen sind aus physikalischen Gründen mit einem grossen Problem behaftet.

Aufgrund der einseitigen Erwärmung während des Durchlaufens der Giessform reagieren die Blöcke mit einer unerwünschten Verformung, das heisst, mit einer auftretenden Verkrümmung, welche mit zunehmender Länge der Blöcke grösser wird. Dabei werden die Wände der Giessform uneben, wodurch bei bisher bekannten Bauarten örtliche Zwischenräume zwischen der Formwand und dem erstarrenden Strang entstehen. Diese verursachen neben einer ungleichmässigen Dicke des erzeugten Stranges einen unkontrollierbaren Wärmefluss vom Giessgut in die Formwand, wodurch im erstarrenden Material örtliche, unzulässige Wärmespannungen auftreten, welche im entstehenden Gefüge des Stranges zu nicht tolerierbaren Rissen führen können. Zudem werden die Stossstellen der aufeinander folgenden Blöcke undicht, was Absätze und Gräte auf der Oberfläche des Stranges zur Folge hat, da die Schmelze in Lücken und Spalten der Formwand eindringt.

Dazu kommt noch das Problem des Abdichtens der in die Giesskammer ragenden Giessdüse, da ein Rückwärtsfliessen der Schmelze unbedingt vermieden werden muss. Offensichtlich wird eine Abdichtung um so schwieriger, je stärker die Blöcke deformiert werden.

Die Wärmespannungen erhöhen sich beträchtlich, wenn die nachfolgende Kühlung der Blöcke auf der zuvor mit der Schmelze in Kontakt gewesenen Fläche, nachstehend Vorderseite genannt, erfolgt.

Je nach Höhe der auftretenden Temperaturdifferenz zwischen erwärmten und gekühlten Oberflächen können die auf dieser Seite periodisch entstehenden Druck- und Zugspannungen die Elastizitätsgrenze des Blockmaterials überschreiten, was infolge der auftretenden Materialermüdung in der Vorderseite der Blöcke zu netzförmigen Rissen führt, wodurch die Oberfläche des Giessproduktes entsprechend beeinträchtigt wird, ein Umstand, welcher ein Auswechseln und eine Nachbearbeitung der im Einsatz stehenden Blöcke nach relativ kurzer Betriebszeit erforderlich macht.

Infolge der erwähnten, hohen thermischen Beanspruchung der Blöcke müssen diese allgemein als Verschleissteile betrachtet werden, welche periodisch durch nachbehandelte oder neue Blöcke ersetzt werden müssen.

Obschon Raupengiessmaschinen gegenüber anderen kontinuierlich arbeitenden Giessverfahren in bezug auf die Qualität des Produktes nachweisbare Vorteile besitzen, konnten sich Maschinen der bisherigen Bauarten infolge der angeführten Probleme, unter Ausnahme der im folgenden beschriebenen Maschine, nur für die Herstellung relativ schmaler Stränge behaupten, da die beschriebene Problematik mit zunehmender Breite der Giessform drastisch wächst.

Aus den US Patenten US 3,570,586 und US 5,979,539 sind Vorrichtungen bekannt, welche das Verwerfen der Blöcke auch bei breiten Maschinen zu verhindern versuchen und zwar dadurch, dass die über die Breite der Giessform reichenden, balkenartigen Blöcke mit kräftigen Befestigungselementen auf starre, praktisch konstante Temperatur aufweisende Stahlträger gespannt werden, deren Flächenträgheitsmoment ein Mehrfaches desjenigen der Blöcke aufweist, wodurch eine unzulässige Deformation der Blöcke weitgehend verhindert werden kann. Die Kühlung der Blöcke erfolgt dabei während des Rücklaufes durch Besprühen der Formwände mit einem wässerigen Kühlmittel. Dieses bekannte Konzept gestattet eine wesentliche Verbreiterung der Maschine gegenüber anderen Bauarten, so dass mit neuen oder nachbearbeiteten Blöcken während limitierter Zeit legierte Aluminium-Stränge guter Qualität bis zu 1,8 m Breite produziert werden können. Dieses Resultat beruht auf der Tatsache, dass neben der zwangsläufigen Erhaltung der Ebenheit der Formwände deren Temperatur infolge der relativ hohen Masse der Blöcke durch Anpassung der Kühlung gut geregelt werden kann, wodurch ein optimaler Erstarrungsvorgang des zu giessenden Materials ermöglicht wird, so dass neben einer Verbesserung der Qualität des Produktes auch eine grössere Palette von metallischen Materialien und deren Legierungen verarbeitet werden kann.

Langjährige Erfahrungen zeigen jedoch, dass die vorgängig angeführten Probleme mit dem beschriebenen Konzept der eingespannten Blöcke nur zum Teil gelöst sind. Indem die Blöcke bei einer Temperaturänderung an der Deformation gehindert werden, entstehen in ihnen gemäss den Gesetzen der Festigkeitslehre entsprechend hohe Spannungen, die sich den ohnehin in den Formwänden entstehenden Wärmespannungen mit gleichem Vorzeichen überlagern, wodurch die Materialermüdung mit begleitender Rissbildung massiv beschleunigt wird. Da anschliessend an die Erwärmung der Blöcke die gleiche Fläche, welche mit dem Giessgut in Berührung war, mit Kühlmittel besprüht wird, verschlimmert sich der vorgängig erwähnte Effekt noch erheblich. Zudem zeigt die Erfahrung, dass die Blöcke trotz ihrer Befestigung auf starren Trägern nach einer gewissen Betriebszeit dennoch Verzerrungen aufweisen, wodurch, wie oben dargelegt, die Qualität des Produktes beeinträchtigt wird. Die Folge der erwähnten Unzulässigkeiten ist, dass die Blöcke nach relativ kurzer Betriebszeit ausgewechselt werden müssen, was wegen der kräftigen Befestigung auf den massiven Trägern jeweils einen grossen Arbeitsaufwand und damit einen die Ökonomie der Anlage belastenden Betriebsunterbruch erfordert.

Aufgrund der vorliegenden Erkenntnisse und Erfahrungen mit Raupengiessmaschinen wird offenbar, dass eine Weiterentwicklung derselben zwecks Lösung der noch bestehenden Probleme für die einschlägige Industrie von grosser Bedeutung ist, da das betreffende Giessverfahren bei entsprechender Vervollkommnung gegenüber anderen Arten in bezug auf Wirtschaftlichkeit, sowie Vielfalt der zu verarbeitenden Materialien und deren Legierungen und auf die Qualität des Produktes anerkannte Vorteile bietet. Es wurde gefunden, dass ein erfolgreicher Betrieb sich nur unter folgenden Bedingungen einstellt:
A) Das Konzept der Bauart der Maschine muss sich für eine Produktion von Strängen hochwertiger Qualität für jede von der Industrie geforderte Breite eignen.
B) Das Auswechseln der Blöcke muss in einem kleinen Bruchteil der bisher dafür notwendigen Zeit erfolgen, um den Arbeitsaufwand und die Stillstandzeiten der ganzen Produktionsanlage auf ein Minimum zu beschränken.
C) Die Betriebsdauer der Blöcke muss gegenüber der bisherigen Standzeit bedeutend erhöht werden.

Die Erfahrung lehrt, dass die Verformung der Blöcke während des Durchlaufens der Giessform infolge der Forderung eines gleichmässigen Erstarrungsvorganges des entstehenden Stranges, und somit des Wärmeflusses von diesem in die Wand der Giessform, je nach der Charakteristik der Erstarrung des Giessgutes höchstens ein bis zwei Zehntelmillimeter betragen darf.

Physikalisch bedingt ist bei einer Erwärmung oder Abkühlung die absolute Mass- und Formänderung eines freien Körpers abhängig von dessen Abmessungen, dem Ausdehnungskoeffizienten des betreffenden Materials und den auftretenden Temperaturverhältnissen. Weist z.B. ein länglicher Körper mit einem rechteckigen Querschnitt, wie dies bei den Blöcken bisheriger Raupengiessmaschinen der Fall ist, in bezug auf die in Längsrichtung des Körpers verlaufende Mittellinie über den Querschnitt ein asymmetrisches Temperaturprofil auf, so reagiert der Körper mit einer Durchbiegung. Während sich das Längenmass bei einem langen gegenüber einem kurzen Körper linear vergrössert, wächst das absolute Mass der Durchbiegung bei gleichem Querschnitt der Körper und identischem Temperaturprofil angenähert im Quadrat des Längenverhältnisses der Vergleichskörper.

Aus dem US Patent US 3,570,586 ist es bekannt die über die Breite der Giessform reichenden, balkenförmigen Blöcke in relativ kleine Stücke, nachstehend auch Blockelemente genannt, zu unterteilen und diese in lateraler Richtung mittels Zugstangen zusammenzuspannen und die so entstehenden Blöcke, deren Steifigkeit gegenüber einteiligen Blöcken reduziert ist, auf starren, praktisch konstante Temperatur aufweisenden Trägern zu befestigen, womit die Deformationen bei Temperaturänderungen der Blöcke weitgehend vermieden werden können.

Dieser bekannte Aufbau der Blöcke erweist sich jedoch als zu aufwendig, da es sich dabei im regelmässig zu ersetzende Verschleissteile handelt. Zudem zeigt sich, dass beim Betrieb infolge der dauernden Temperaturwechsel Verschiebungen der Elemente stattfinden, wodurch die erforderliche Ebenheit der Blöcke auf die Dauer nicht gewährleistet ist. Der erwartete Erfolg mit dieser scheinbaren Lösung bleibt somit aus, so dass von einem Einsatz im Betrieb Abstand genommen werden muss.

Zudem, wie vorgängig erwähnt, erfordert das betreffende Konzept für das Auswechseln der Blöcke, insbesondere bedingt durch das Lösen und Befestigen derselben auf ihren Trägern, einen grossen Arbeitsaufwand und einen entsprechend langen Betriebsunterbruch der gesamten Produktionslinie. Zudem sind die Blockelemente bei Temperaturänderungen infolge deren kräftigen Verbindung mit ihrem Träger an einer freien Formänderung gehindert, was, wie bereits vorgängig erklärt, zusätzliche Spannungen in den Elementen hervorruft und damit deren Betriebszeit negativ beeinflusst.

Hier will die Erfindung Abhilfe schaffen. Der Erfindung liegt die Aufgabe zugrunde, eine Giessmaschine zu schaffen, welche in der Lage ist die unter (A), (B) und (C) angeführten Bedingungen für einen wirtschaftlich erfolgreichen Einsatz von Raupengiessmaschinen zu erfüllen.

Die Erfindung löst die gestellte Aufgabe mit einem Raupengiessverfahren, welches die Merkmale des Anspruchs 1 aufweist, sowie mit einer Giessmaschine, welche die Merkmale des Anspruchs 4 aufweist und einem Verfahren zum Auswechseln der Blöcke einer Giessmaschine, welches die Merkmale des Anspruchs 28 aufweist.

Die durch die Erfindung erreichten Vorteile sind im wesentlichen darin zu sehen, dass dank der erfindungsgemässen Giessmaschine
- Die Formwände beim Lauf der Blöcke durch den Giessraum eben bleiben, so dass über die ganze Breite und Länge derselben eine kontrollierte Abkühlung und eine gleichmässige Dicke des entstehenden Stranges resultiert, eine Voraussetzung um mit dem Verfahren Produkte hoher Qualität und mit legiertem Material und jeder von der Industrie geforderten Breite zu schaffen;
- das Auswechseln der Blöcke in einem kleinen Bruchteil der bisher dafür notwendigen Zeit durchführbar ist, und dadurch
- der Arbeitsaufwand und die Stillstandzeiten der ganzen Produktionsanlage während des Auswechseln der Blöcke auf ein Minimum beschränkt werden kann.
   In einer bevorzugten Ausführungsform der Erfindung beträgt das Verhältnis des Teils t, auf welchem die Blöcke mittels der stationären Magnete auf dem Transportmittel gehalten werden, zur gesamten Umlaufbahn U der entsprechenden Giessraupe t : U zwischen 0,55 und 0,95. Damit ist der Vorteil erreichbar, dass die Blöcke durch die stationären Magnete nur dort auf dem Transportmittel gehalten werden, wo sie wegen der Schwerkraft vom Transportmittel herunterfallen würden. Auf der Strecke, wo keine stationären Magnete angebracht sind, können die Blöcke mittels eines Hebezeuges ohne Lösen von Befestigungsmitteln vom Transportmittel entfernt werden.

Weitere vorteilhafte Ausgestaltungen der Erfindung sind in den abhängigen Ansprüchen gekennzeichnet.

Die Erfindung und Weiterbildungen der Erfindung werden im folgenden anhand der teilweise schematischen Darstellungen mehrerer Ausführungsbeispiele noch näher erläutert.

Es zeigen:
Fig. 1 eine perspektivische Ansicht einer Ausführungsform einer erfindungsgemässen Giessmaschine mit zwei Giessraupen;
Fig. 2 eine Seitenansicht der Giessform der in Fig. 1 dargestellten Ausführungsform der erfindungsgemässen Giessmaschine;
Fig. 3 einen Schnitt quer zur Längsrichtung durch eine Giessraupe im Bereich einer Antriebsachse mit elektromagnetischen Umlenkbogen und den zugehörigen Stromleitern;
Fig. 4 einen vergrösserten Ausschnitt wie in Fig. 3 angegeben;
Fig. 5 einen vergrösserten Ausschnitt wie in Fig. 3 angegeben;
Fig. 6 eine perspektivische Ansicht eines Rahmens mit zwei Blockelementen gemäss einer Ausführungsform der erfindungsgemässen Giessmaschine;
Fig. 7 einen Teilschnitt durch einen mit zwei Blockelementen bestückten Rahmen gemäss der in Fig. 6 dargestellten Ausführungsform der erfindungsgemässen Giessmaschine;
Fig. 8 einen vergrösserten Ausschnitt aus dem in Fig. 7 dargestellten Teilschnitt;
Fig. 9 eine perspektivische Ansicht einer Traverse mit Blöcken gemäss einer Ausführungsform der erfindungsgemässen Giessmaschine;
Fig. 10 einen vergrösserten Ausschnitt gemäss der Markierung E in Fig. 9;
Fig. 11 eine Ansicht von lateral auf einen Block gemäss der in den Fig. 9 und 10 dargestellten Ausführungsform der erfindungsgemässen Giessmaschine;
Fig. 12 einen Schnitt längs der Linie A-A in Fig. 11;
Fig. 13 einen vergrösserten Ausschnitt gemäss der Markierung B in Fig. 12;
Fig. 14 einen Schnitt quer zur Längsrichtung durch die untere Giessraupe einer Ausführungsform der erfindungsgemässen Giessmaschine; und
Fig. 15 einen Schnitt entlang der Linie B-B in Fig. 14.

Die nachfolgende Beschreibung bezieht sich auf Maschinen mit zwei einander gegenüber liegenden Maschinenkörpern und Raupen sowie auf eine horizontale oder leicht geneigte Giessrichtung, gilt aber sinngemäss auch für Maschinen mit vertikaler oder stark geneigter Giessrichtung, sowie, was die Bauart der Raupen und die Halterung der Blöcke betrifft, wie früher erwähnt, auch auf Maschinen mit nur einer Raupe.

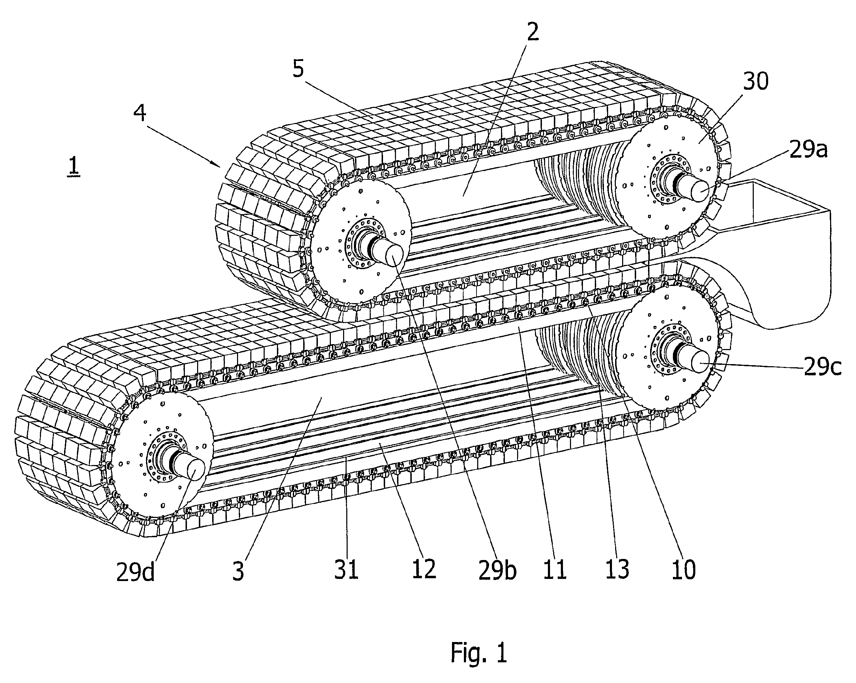

Der grundsätzliche Aufbau der hiermit beschriebenen Giessmaschine 1 ist aus Fig. 1 ersichtlich. Das flüssige Giessgut wird in üblicher Weise mittels einer Düse in die Giessform geführt, welche durch die mittels eines nicht eingezeichneten Antriebs raupenartig um eine obere und eine untere Giessraupe 2;3 laufenden Blöcke 4 gebildet wird. Beidseitig wird die Giessform entsprechend dem Stand der Technik durch nicht eingezeichnete, stationäre oder ebenfalls mitlaufende Seitendämme geschlossen.

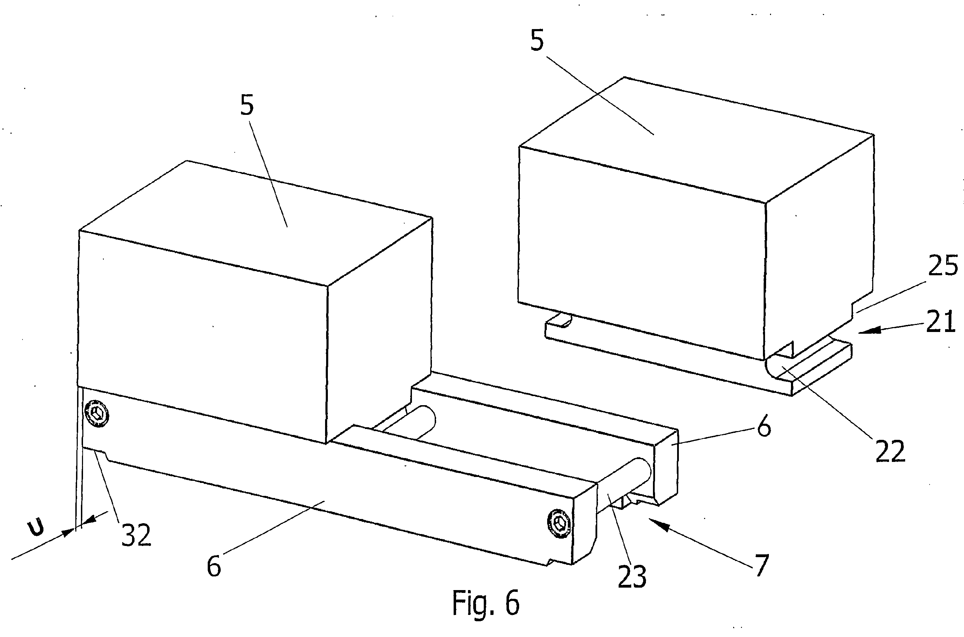

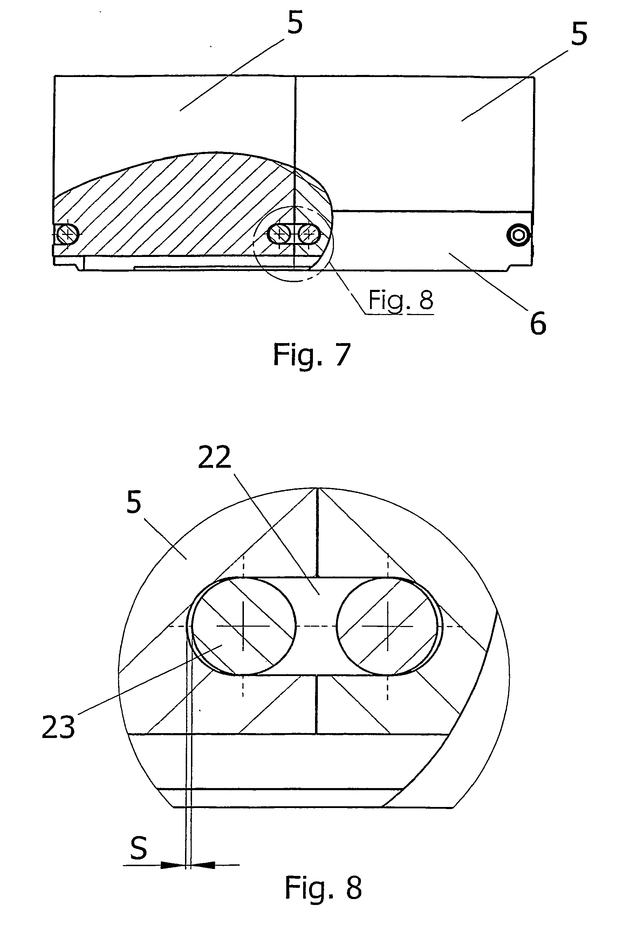

Wie in den Fig. 6 und 7 gezeigt, werden beispielsweise zwei in lateraler Richtung aneinander grenzende Blockelemente 5 mittels Rahmen unter Beibehaltung der Möglichkeit zur thermischen Ausdehnung zusammengefügt. Jeder der Rahmen 7 umfasst zwei in Längsrichtung der Giessraupen 2;3 voneinander distanzierte, in lateraler Richtung angeordnete stabförmige Traversen 6 aus ferromagnetischem Material, welche mittels in Längsrichtung der Giessraupen 2;3 angeordnete verschraubbare Querverbindungen 23 zusammengehalten werden. Zwischen je zwei Traversen 6 werden, je nach Breite des Giessraumes, ein oder mehrere Blockelemente 5 eingefügt, derart, dass die in Längsrichtung verlaufenden seitlich offenen Einhängenuten 22 an den Einhängungen 21 die Querverbindungen 23 aufnehmen. Dabei sind die lateralen Abstände der Querverbindungen 23 so gross, dass zwischen den Querverbindungen 23 und der Wand der Einhängenuten 22 in lateraler Richtung ein Ausdehnungsspiel S verbleibt (Fig. 8). Durch diese Gestaltung der Rahmen 7 ist gewährleistet, dass die Blockelemente 5 sich innerhalb der Rahmen 7 lateral ausdehnen können, ohne durch die Querverbindungen 23 behindert zu werden. Ferner sind die Blockelemente 5 im Bereich ihrer Einhängungen 21 in Längsrichtung der Giessraupen 2;3 entsprechend dem Abstand zwischen den stabförmigen Traversen 6 verjüngt. Auf ihrer Unterseite weisen die Traversen 6 Kerben 32 auf, mittels welcher sie in den Ketten 10 einrasten (Fig. 1).

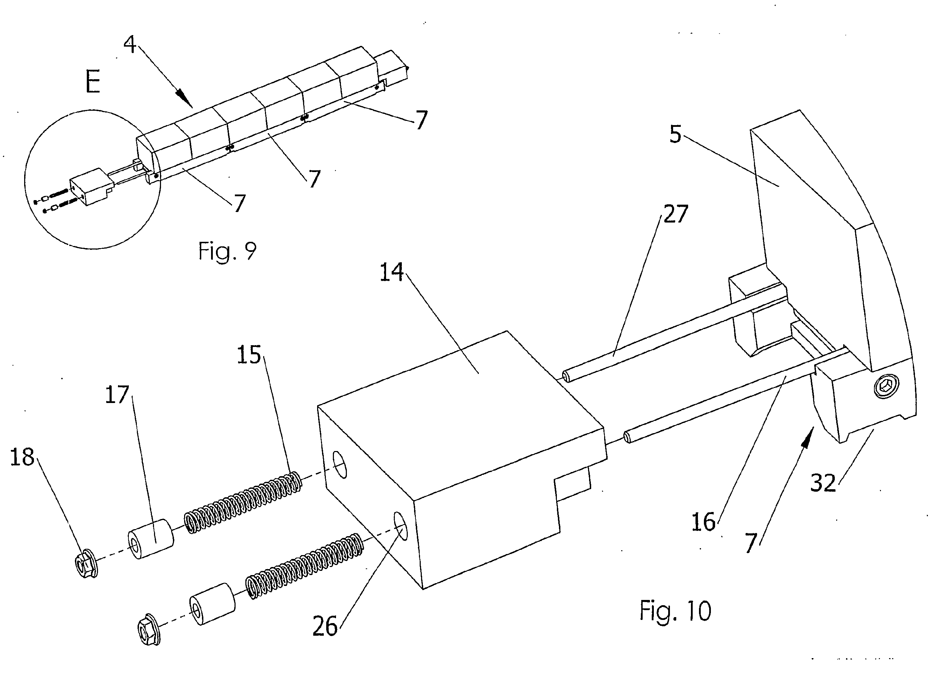

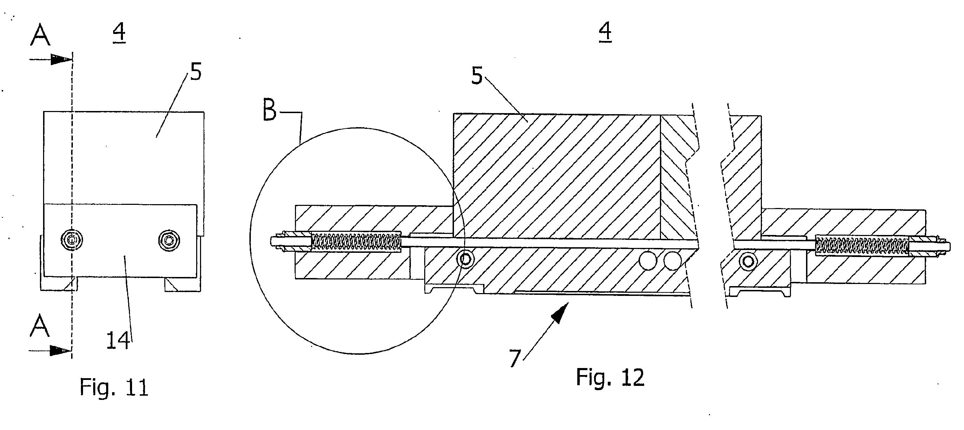

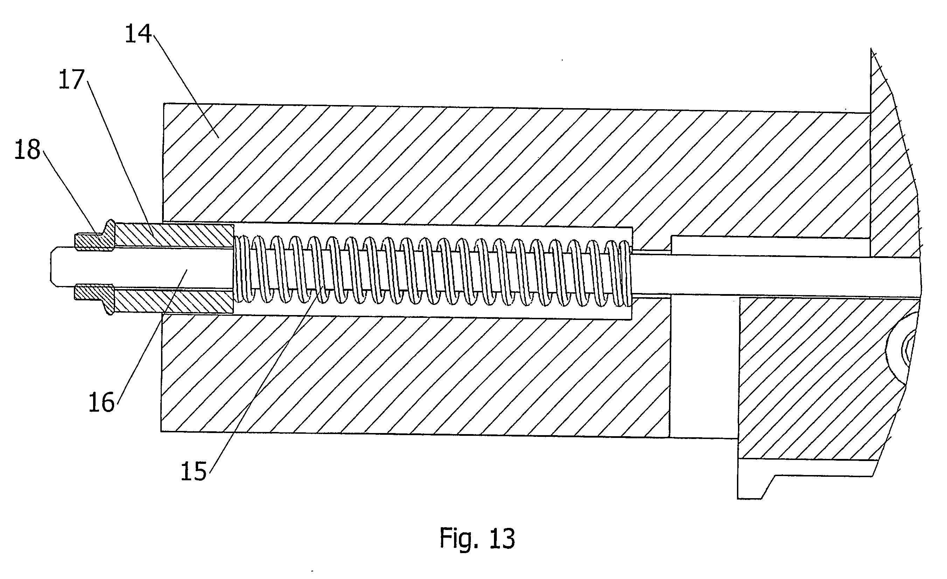

Wie in den Fig. 9 bis 13 dargestellt, werden die in den Rahmen 7 lateral aneinander anliegenden Blockelemente 5 mittels Zugstangen 16 zu einem sich über die gesamte Breite der Giessraupen 2;3 erstreckenden Block 4 federnd zusammengehalten. Diese Zugstangen 16 erstrecken sich entlang der Traversen 6. Damit die Zugstangen 16 an den Blockelementen 5 vorbei geführt werden können, sind die Traversen 6 oben verjüngt ausgestaltet. An den lateralen Begrenzungen des so zusammengefügten Blockes 4 durchdringen die Zugstangen 16 je ein an den aussenliegenden Rahmen 7 angebrachtes Federlager 14. Die Federlager 14 liegen aussen an den lateral aussenstehenden Blockelementen 5 an und weisen in lateraler Richtung verlaufende Bohrungen 26 auf, worin die aussen über die Zugstangen 16 geschobenen Spannfedern 15 aufgenommen werden. Die Zugstangen 16 weisen endständig ein Gewinde 27 auf, worauf die Vorspannmuttern 18 schraubbar sind. Ferner ist zwischen den Vorspannmuttern 18 und den Spannfedern 15 je ein Druckstück 17 angeordnet. Mittels der Vorspannmuttern 18 werden die Spannfedern 15 axial vorgespannt, so dass die Federlager 14 seitlich gegen die Blöcke 4 gepresst werden. Damit werden die über der Breite der Maschinenkörper 2;3 angeordneten Blockelemente 5 mittels Federkraft zusammengepresst und können sich lateral gegen die Wirkung der Federkräfte ausdehnen.

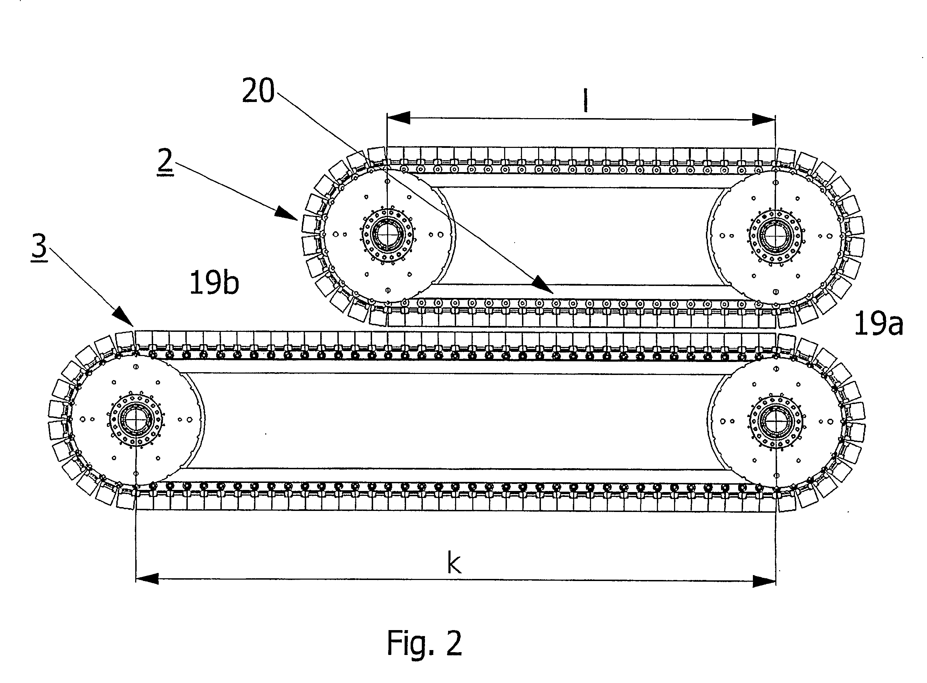

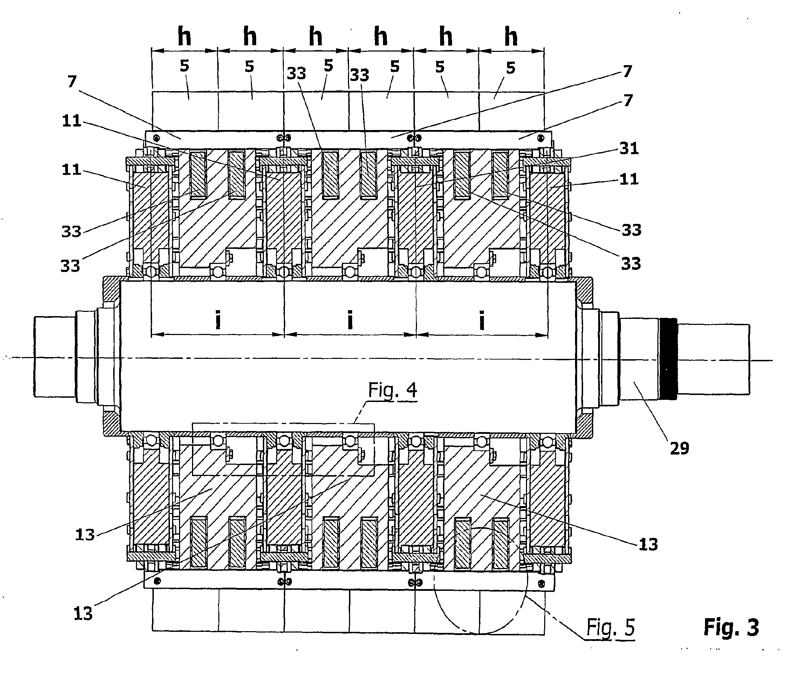

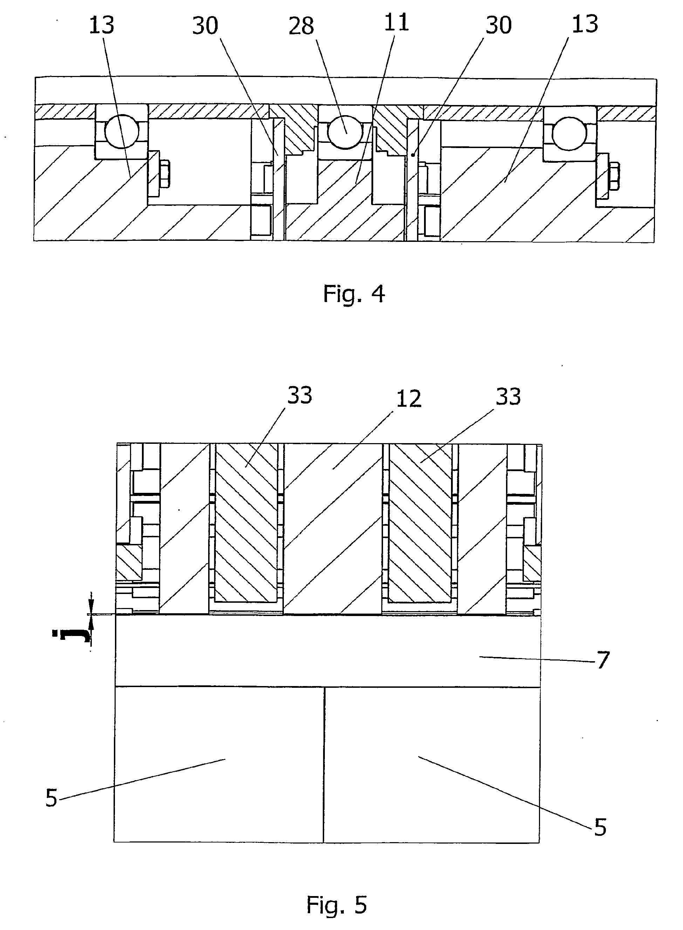

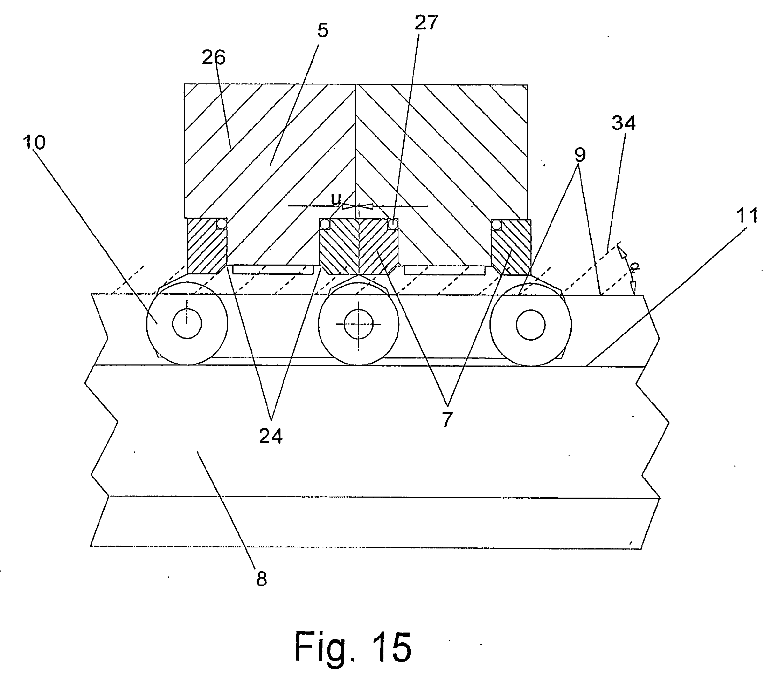

Die nachfolgend beschriebene Erfindung besteht somit darin, dass die über die Breite der Giessform reichenden Blöcke 4 in lateraler Richtung aus mehreren Teilen bestehen, nachfolgend Blockelemente 5 genannt, welche in Rahmen 7 aus magnetisierbarem Material positioniert sind und so gehalten werden, dass sie sich bei den auftretenden Temperaturänderungen ungehindert deformieren können, und dass die zusammengesetzten Blöcke 4, als Einheit, auf vorzugsweise mit Kettenrollen 10 (Fig. 15) versehenen, auf endlosen Bahnen um den betreffenden Maschinenkörper zirkulierenden Transportmitteln in Form von Ketten 20 (Fig. 2) sitzen, wobei zwischen den Laufbahnen 11 (Fig. 1) der Ketten 20 (Fig. 2 und 3) auf der Unterseite der Giessraupen 2;3 stationäre Magnete, vorzugsweise Magnetschienen 12 (Fig. 1 und 5) und auf der Ein- und Austrittseite 19a;19b (Fig. 2) der Giessform stationäre, Magnetbogen 13 (Fig. 1) vorhanden sind, durch welche die mit den Blockelementen 5 beladenen Rahmen 7 mit den Ketten auf die Laufbahnen 11 gezogen und auf diesen so geführt werden, dass die Rahmen 7 berührungslos über die feststehenden, Magnetschienen 12 und Magnetbogen 13 gleiten, wobei über die Breite der Giessform mehrere Ketten 20 angeordnet sein können, deren Distanz voneinander so bemessen ist, dass eine unzulässige Durchbiegung der auf den Ketten 20 sitzenden Rahmen 7 und damit der über die Breite der Giessform reichenden, zusammengesetzten Blöcke 4 vermieden wird, womit infolge der nur geringen Deformation der relativ kleinen Blockelemente 4 und deren bestimmten unveränderlichen Position in den Rahmen 7 trotz der auftretenden Temperaturänderung beim Durchlaufen der Giessform, unabhängig von deren Länge und Breite, praktisch ebene Formwände gebildet werden und wobei die Blöcke 4 auf der Oberseite der Maschinenkörper 2;3 frei auf den Ketten 20 sitzen und beim Auswechseln mittels eines mit geeigneter Greifvorrichtung versehenen Hebezeuges ohne zusätzlichen Zeit- und Arbeitsaufwand für das Lösen und Befestigen der Blöcke 4 abgehoben oder aufgesetzt werden können.
Die Grösse der Blockelemente 5 ist abhängig von der beim Durchlaufen der Giessform zulässigen Deformation. Entsprechend der vorliegenden Erfindung, basierend auf Untersuchungen und Erfahrung, soll das Mass eines Blockelementes 5 in lateraler Richtung 25 cm (Fig. 3 "h") nicht überschreiten.

Entsprechend vorliegender Erfindung soll die maximale Distanz zwischen den Abstützungen der Rahmen, d. h. im vorliegenden Fall der Abstand zwischen zwei Ketten, das Mass von 30 cm (Fig. 3 "i") nicht übersteigen.

Die magnetischen Kräfte müssen das Gewicht der Blöcke 4 auf der Unterseite der Giessraupen 2;3 und auf den auf der Ein- und Austrittseite 19a;19b der Giessform vorhandenen Magnetbogen 13 mit Sicherheit halten. Diese Bedingung kann nur mit einer genauen Führung der die Blöcke 4 tragenden Rahmen 7 über den Magnetschienen 12 und den Magnetbogen 13 erfüllt werden, indem der Abstand j zwischen diesen und den darüber gleitenden Rahmen 7 der Blöcke 4 aus physikalischen Gründen nur wenige Zehntelmillimeter (Fig. 5) betragen darf.

Entsprechend der vorliegenden Erfindung wird die genannte Bedingung erfüllt indem die stationären, Magnetbogen 13 und die Bogen der Laufbahnen 11 der Ketten 20 Gleit- oder Wälzlager 28 aufweisen und zwischen den mit den Ketten 20 im Eingriff stehenden Kettenrädern 30 auf deren, am Ein- und Austritt der Giessform vorhandenen, rotierenden Antriebswellen 29 positioniert sind, womit die erforderliche Konzentrizität der Magnetbogen 13 mit den Laufbahnen 11 der Ketten 20, wie auch deren genaue Position in bezug auf die Giessraupen 2;3 und die Kettenräder 30 gewährleistet wird, so dass der Luftspalt zwischen den Magnetbogen 13 und den sich darüber bewegenden Blöcken 4 selbst beim Verschieben der Antriebswellen 29 auf dem Maschinenkörper zwecks Einstellung der günstigsten Wellendistanz nicht beeinflusst wird.

Entsprechend der vorliegenden Erfindung weist die untere Giessraupe 3 bei Maschinen mit horizontaler oder leicht geneigter Giessrichtung auf der Austrittseite 19b eine grössere Länge (Fig. 2 "k") auf als die obere (Fig. 2 "l"), womit auch die auf der unteren Giessraupe 3 befindlichen Blöcke 4 analog zu den oberen, ohne Behinderung ausgewechselt werden können, indem diese mittels des Maschinenantriebes schrittweise auf die Verlängerung (Fig. 2 "k" - "l") gebracht werden.

Entsprechend vorliegender Erfindung kann auf der austrittseitigen Verlängerung der unteren Giessraupe 3 eine auf die Oberseite des auslaufenden Stranges wirkende zusätzliche Kühlung vorgesehen werden, wodurch die Austrittsgeschwindigkeit des erzeugten Stranges und damit die Kapazität der Giessmaschine 1 wie auch die Standzeit der Blöcke 4 bedeutend erhöht wird, da sich die von diesen aufzunehmende Wärmemenge entsprechend verkleinert.

Die Kühlwirkung kann durch Anblasen der Oberfläche des Produktes mit Luft oder mittels Besprühung mit einem flüssigen Kühlmittel erfolgen, welches auf bekannte Art von der Oberfläche des Stranges abgesaugt und zurück in den Kreislauf gefördert wird. Für das Auswechseln der Blöcke 4 wird die vorzugsweise mit Rollen versehene, auf Schienen sitzende Kühlvorrichtung um die erforderliche Distanz in Giessrichtung verschoben, womit die Zugänglichkeit der Blöcke 4 gewährleistet ist.

Bei Maschinen mit vertikaler oder stark geneigter Giessrichtung wird die magnetische Anziehungskraft im Scheitel der Bogen über eine Strecke von drei bis vier Blöcken 4 unterbrochen, so dass diese in diesem Bereich frei auf den Ketten 20 sitzen und somit bei entsprechendem Nachfahren der Ketten 20 alle Blöcke 4 abgehoben und ersetzt werden können.

Entsprechend der vorliegenden Erfindung ist das Auswechseln der Blöcke 4 dadurch gekennzeichnet, dass eine an einem Hebezeug in horizontaler Lage hängende, auf der Unterseite mit Dichtungen versehene, mit einem Vakuumsystem verbundene Platte auf die auszuwechselnden Blöcke 4 gesenkt wird, wonach das zwischen Platte und Blöcken vorhandene Vakuumsystem durch Betätigen der betreffenden Ventile aktiviert wird, so dass sich die Blöcke 4 an der Platte festsaugen und mittels des Hebezeuges in einem kleinen Bruchteil des bisherigen Aufwandes an Zeit und Arbeit ausgewechselt werden können.

Unter Anwendung der hiermit bekanntgemachten Erfindungen werden die vorgängig unter (A) und (B) festgehaltenen Bedingungen offensichtlich erfüllt.

Die Anwendung magnetischer Kräfte bei kontinuierlich arbeitenden Stranggiessmaschinen ist bekannt. Das US-Patent Nr. 4,794,978 beschreibt einen Seitendamm mit gelenkig miteinander verbundenen Dammeinheiten, welche auf einer geschlossenen Bahn zirkulieren, wobei die Dammblöcke aus einem mit einem Permanentmagneten versehenen Blockträger und einem auswechselbaren Block aus ferromagnetischem Material bestehen, wobei dieser durch den Magneten angezogen und damit auf dem Träger gehalten wird. Die Blöcke sitzen dabei fest auf den um die ganze Umlaufbahn zirkulierenden Magneten und sind im Unterschied zu der vorliegenden Erfindung ohne Unterbruch der magnetischen Anziehungskraft ausgesetzt. Offensichtlich müssen die Blöcke zum Auswechseln unter entsprechendem Kraftaufwand einzeln von ihrem Träger gezerrt werden. Das gleichzeitige Auswechseln mehrerer Blöcke ist dabei weder vorgesehen noch praktisch durchführbar. Da die Dammblöcke aus ferromagnetischem Material bestehen müssen, ist der Einsatz homogener Blöcke mit höherer Wärmeleitzahl, wie zum Beispiel Kupfer oder Aluminium unmöglich. Im Gegensatz zu dieser bekannten Anwendung handelt es sich bei der vorliegenden, erfindungsgemässen Lösung nicht um mitwandernde Magnete, sondern um feststehende Magnetschienen 12, über welche die Blöcke 4 berührungslos gleiten, wobei die Magnetschienen 12 auf der Oberseite der Giessraupen 2;3 unterbrochen sind, so dass die Blöcke 4 in diesem Bereich unbefestigt sind und nur mit ihrem Eigengewicht auf den Ketten 20 sitzen, wodurch ein Auswechseln innert kürzester Zeit vollzogen werden kann.

Eine andere, bekannte Anwendung magnetischer Kräfte bei einer Raupengiessmaschine besteht gemäss Offenlegungsschrift DE 4121169A1 darin, dass die, die Giessform bildenden Blöcke mittels an beiden Enden der Giessform vorhandener Vorrichtungen um 180° von einer Seite des Maschinenkörpers auf die gegenläufige Laufbahn geschwenkt werden, wobei die Blöcke durch vier auf einem rotierenden Kreuz befindliche Magnete erfasst und während des Transportes festgehalten werden.

Bauart und Zweck der Anwendung unterscheiden sich wiederum deutlich von der hier beschriebenen Erfindung, wo keine beweglichen Magnetkörper für den Transport der Blöcke auf der Umlaufbahn zur Anwendung gelangen. Ein gruppenweises Auswechseln der Blockelemente ist bei der durch die erwähnte, offengelegte Bauart der Maschine weder vorgesehen noch durchführbar.

Bei Maschinen, in welchen die Giessform durch mitlaufende, dünne Stahlbänder gebildet wird (amerikanisch: "Belt-Caster"), kann einer unerwünschten Verzerrung der Bänder infolge Erwärmung beim Durchlaufen des Giessraumes mit magnetischen Kräften entgegengewirkt werden (Britisches Pat. Nr. 1 388 378, LX Pat. Nr. 79065).

Offensichtlich besteht in Zweck und Art der bekannten Anwendungen von Magneten ein grundlegender Unterschied gegenüber der vorliegenden Erfindung. Bei dieser wird ein Wegfallen der Blöcke 4 verhindert, welche sich ohne weitere Befestigung auf den am Ein- und Austritt des Giessraumes angeordneten bogenförmigen Laufbahnen und auf der Unterseite der Giessraupen 2;3 befinden.

Um eine gegenüber bisherigen Maschinen wesentlich längere Standzeit der Blöcke 4 zu erreichen, müssen die in ihnen zyklisch auftretenden thermisch bedingten Wechselspannungen auf ein Minimum reduziert werden, um eine Rissbildung auf der Vorderseite der Blöcke 4 infolge einer Ermüdung des Blockmaterials zu verzögern. Wie bereits vorgängig beschrieben, werden die Blöcke 4 erfindungsgemäss in ihren Rahmen 7 derart gehalten, dass sie sich bei den auftretenden Temperaturschwankungen in allen drei Dimensionen ungehindert verformen können, damit in den Blöcken 4 keine zusätzlichen, schädlichen Spannungen infolge äusserer auf sie wirkender Befestigungskräfte auftreten. Dadurch wird die Ermüdung des Blockmaterials verzögert und eine längere Standzeit erreicht.

Entsprechend einer Ausführungsform der vorliegenden Erfindung erfolgt die Kühlung nur auf der Rückseite der Blöcke 4, so dass in diesen immer ein gleichgerichteter Wärmefluss vorhanden ist, wodurch die Differenz zwischen Maximal- und Minimaltemperatur auf der kritischen Vorderseite beträchtlich reduziert wird, was zur Folge hat, dass die auftretenden, wechselnden Wärmespannungen auch entsprechend kleiner ausfallen, womit gegenüber Blöcken, welche an einer freien Formänderung gehindert sind und zudem auf der Vorderseite gekühlt werden, eine erhebliche Verlängerung der Standzeit erreicht wird.

Gemäss bekannter Praxis kann die Standzeit der Blöcke 4 noch beträchtlich erhöht werden, indem die Vorderseite mit einer wärmeisolierenden Schutzschicht aus keramischem Material versehen wird.

Entsprechend der vorliegenden Erfindung wird eine beträchtliche Erhöhung der Standzeit erreicht, indem die Vorderseite der Blöcke 4 mit einer Folie von wenigen Zehntelmillimetern Dicke, zum Beispiel aus Stahl oder Titan, versehen wird, deren Festigkeit diejenige des Blockmaterials wesentlich übersteigt und infolge einer relativ niedrigen Wärmeleitzahl zugleich als Wärmedrossel wirkt, so dass die auftretende, maximale Temperatur auf der Fläche des darunterliegenden Blockmaterials reduziert wird, womit die in diesem auftretenden, periodisch wechselnden Wärmespannungen und damit die Ermüdungsfolgen entsprechend geschwächt werden.

Wie vorgängig festgehalten, ergibt sich eine weitere Erhöhung der Betriebszeit der Blöcke 4 durch eine Sekundärkühlung des gegossenen Stranges auf der Verlängerung des unteren Maschinenkörpers.

Unter Anwendung der hiermit offengelegten Massnahmen wird auch die vorgängig unter (C) geforderte Bedingung erfüllt.

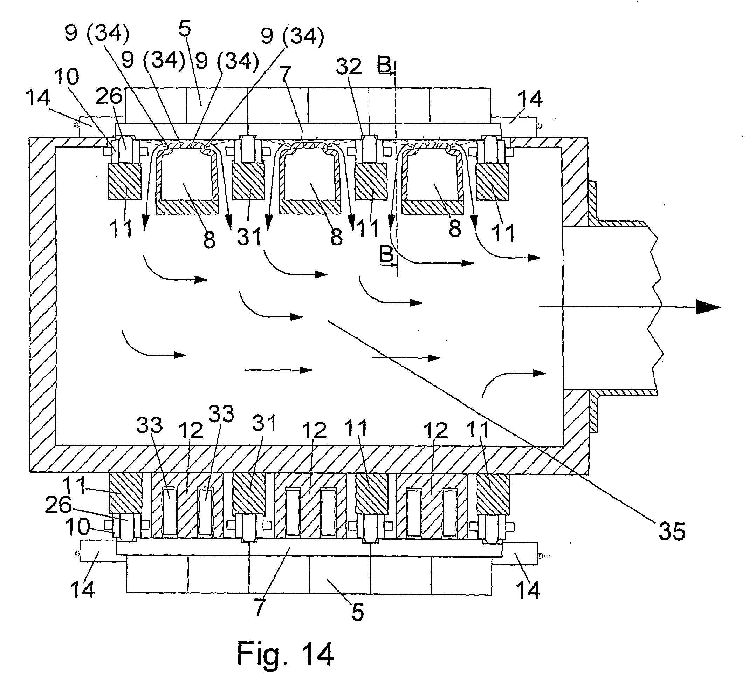

Das in den Fig. 14 und 15 dargestellte Kühlsystem der Blöcke 4 der hiermit beschriebenen Maschine besteht darin, dass die Kühlflüssigkeit unter Druck in einen in die Giessraupen 2;3 eingebauten, über die Breite des Giessraumes reichenden Kasten gepumpt wird und von diesem durch auf der Oberseite der Giessraupen 2;3 parallel zur Giessrichtung zwischen den Führungsbahnen der Ketten 20 angeordnete Kühlmittelkanäle 8 fliesst, welche über die Länge verteilte Düsen 9 aufweisen, durch welche der Kühlmittelstrahl 34 auf die Rückseite der Blöcke 4 gespritzt wird, so dass eine gleichmässige Kühlung derselben erfolgt.

Entsprechend der vorliegenden Erfindung wird eine Mehrzahl der Düsen 9 so gerichtet, dass die Kühlmittelstrahlen 34 den Blöcken 4 einen Impuls in, oder wenn erforderlich, gegen die Giessrichtung erteilen, um damit bei der durch den Giessprozess gegebenen, günstigsten Giessrichtung die Schliesskraft zwischen den aufeinanderfolgenden Blockreihen zu optimieren.

Um einen unerwünschten Ausfluss von Kühlflüssigkeit aus den Giessraupen 2;3 zu verhindern, wird die erwärmte Kühlflüssigkeit in einer Kühlmittel-Rückflusskammer 35 gesammelt und auf bekannte Art aus den Giessraupen 2;3 abgesaugt und, wie bei Giessanlagen üblich, in einen geschlossenen Kreislauf, bestehend aus Luftabscheider, Rückkühler, Kühlmitteltank, Pumpen, Filter, Mess- und Regelorganen etc. zurückgeführt.

Die die Blöcke 4 tragenden Ketten 20 werden vorzugsweise mit Rollen 10 versehen, um die Reibung auf der Laufbahn 11 auf ein Minimum zu reduzieren. Die Rollen 10 mindestens einer Kette 20 laufen dabei auf einer mit seitlichen Führungen versehenen Laufbahn 31, wodurch die Blöcke 4 lateral geführt werden.

Der Antrieb der Ketten 20 mit den darauf sitzenden Blöcken 4 erfolgt durch auf der Ein- und Austrittseite 19a;19b der Giessform, neben den Laufbahnen 11 angeordnete Kettenräder 30, deren Wellen 29 mit einem in der Drehzahl regulierbaren Antrieb verbunden sind.

Entsprechend der vorliegenden Erfindung erfolgt der Antrieb der Blöcke 4 der oberen Giessraupe 2 auf der Austrittseite 19b der Giessform, so dass die Blöcke 4 auf der Unterseite, das heisst im Bereich der Giessform, durch das Gewicht der auf der eintrittseitigen bogenförmigen Laufbahn befindlichen Blöcke 4 dichtend zusammengeschoben werden, wobei, je nach den Reibungsverhältnissen der Ketten 20 auf der Laufbahn 11 und der Neigung der Giessform, der die Kettenräder 30 tragenden Welle 29a auf der Eintrittseite 19a ein angemessenes Drehmoment entgegen der Drehrichtung erteilt wird, um die Kraft zwischen den aufeinander liegenden Blockreihen in der Giessform auf die erforderliche und zulässige Grösse zu reduzieren.

Entsprechend der vorliegenden Erfindung wird der gleiche Effekt auch auf dem unteren Maschinenkörper 3 erreicht, indem sich die antreibende Welle 29c der Ketten 20 auf der Eintrittseite 19a der Giessform befindet und der auf der Austrittseite 19b angeordneten Welle 29d mit den daraufsitzenden Kettenrädern 30 ein angemessenes Gegendrehmoment erteilt wird, so dass sich die Blockreihen im Bereich der Giessform stossen und damit aufeinander aufliegen.

Obschon die relativ kleinen Blockelemente 5 bei einer Temperaturänderung ihre Dimension nur geringfügig ändern, muss diesem Umstand Rechnung getragen werden.

Entsprechend der vorliegenden Erfindung besteht die Lösung dieses Problems darin, dass die Gelenke der Kettenglieder 26 in der Längsrichtung ein Spiel aufweisen, so dass sich die Teilung der Ketten 20 der Dimension der kalten wie auch der sich beim Durchlaufen der Giessform erwärmenden Blöcke 4 und der Verzahnung der Kettenräder 30 anpassen kann.

Bei der vorgängig beschriebenen Antriebsart können die Blöcke 4 je nach ihrer Temperatur auf der der Giessform entgegenliegenden Seite der Giessraupen 2;3 infolge des Spieles in den Gelenken der Ketten 20 auseinandergezogen werden, wobei ein Zwischenraum zwischen den aufeinanderfolgenden Blöcken 4 entsteht.

Entsprechend der vorliegenden Erfindung werden die Blöcke 4 deshalb in ihrem Rahmen 7 um ein Mass u (Fig. 6 und 15) versetzt angeordnet, so dass immer eine Überdeckung des Zwischenraumes vorhanden ist, wodurch in den Kühlzonen ein Durchfluss von Kühlflüssigkeit zwischen den Blöcken 4 auf die Formfläche verhindert wird.

Die ohne Befestigung auf den Ketten 20 sitzenden Blöcke 4 müssen offensichtlich gegen eine Verschiebung auf dem betreffenden Kettenglied 26 gesichert sein.

Entsprechend der vorliegenden Erfindung weisen die Kettenglieder 26 eine Verzahnung auf, welche passend in die Blöcke 4 greift, womit deren Position auf den zirkulierenden Ketten 20 bestimmt und gesichert ist.

## Patentansprüche

1. Raupengiessverfahren zur kontinuierlichen Herstellung von Barren oder Bänder aus metallischen oder nichtmetallischen Werkstoffen, wobei es in einer Giessform durchgeführt wird, welche durch Blöcke (4) gebildet wird, welche auf einem Transportmittel raupenartig um eine Giessraupe (2;3) zirkulieren, **dadurch gekennzeichnet, dass** mindestens auf einem Teil t der Umlaufbahn U, wo sie wegen der Schwerkraft vom Transportmittel herunterfallen würden, mittels stationär befestigter Magnete auf dem Transportmittel gehalten werden.

2. Giessverfahren nach Anspruch 1, **dadurch gekennzeichnet, dass** die Giessform eine obere und einen untere Giessraupe (2;3) umfasst.

3. Giessverfahren nach Anspruch 1 oder 2, **dadurch gekennzeichnet, dass** das Verhältnis des Teils t, auf welchem die Blöcke (4) mittels stationärer Magnete auf dem Transportmittel gehalten werden, zur gesamten Umlaufbahn U der mindestens einen Giessraupe (2;3) t : U zwischen 0,55 und 0,95 beträgt.

4. Giessmaschine (1) zur Durchführung des Verfahrens nach einem der Ansprüche 1 bis 3, wobei mindestens eine Wand der Giessform aus Blöcken (4) besteht, welche raupenartig um mindestens eine Giessraupe (2;3) zirkulieren, **dadurch gekennzeichnet, dass** die Blöcke (4) lose auf einem Transportmittel, vorzugsweise einer Kette (20) sitzen, so dass sie sich bei Temperaturänderungen in allen Richtungen frei deformieren können, wobei sie mindestens auf einem Teil der Umlaufbahn der mindestens einen Giessraupe (2;3) mittels stationärer Magnete gegen die Laufbahnen 31 gezogen und durch das Transportmittel geführt werden, so dass die Blöcke (4) berührungslos über den feststehenden Magneten bewegbar sind.

5. Giessmaschine (1) nach Anspruch 4, **dadurch gekennzeichnet, dass** die Magnete Permanentmagnete oder vorzugsweise Elektromagnete sind.

6. Giessmaschine (1) nach Anspruch 5, **dadurch gekennzeichnet, dass** als Magnete eine Anzahl separater Magnete vorgesehen sind.

7. Giessmaschine (1) nach einem der Ansprüche 4 bis 6, **dadurch gekennzeichnet, dass**
A) die über die Breite der Giessform reichenden Blöcke (4) in lateraler Richtung aus mehreren Blockelementen (5) bestehen, welche in Rahmen aus ferromagnetischem Material (7) positioniert sind und vorzugsweise mittels Spannfedern (15) aufweisenden Zugstangen (16) zusammengehalten werden, wobei sie sich bei den während des Giessvorgangs auftretenden Temperaturänderungen ungehindert deformieren können;
B) die mittels der Rahmen (7) zusammengesetzten Blöcke (4), als Einheit, ohne mechanische Befestigung auf den Giessraupen (2;3) sitzen, wobei
C) zwischen den Laufbahnen (11) der Transportmittel auf der Unterseite der mindestens einen Giessraupe (2;3) mindestens eine stationäre, Magnetschiene (12) und auf der Ein- und Austrittseite (19a;19b) der Giessform mindestens ein stationärer Magnetbogen (13) vorhanden sind, durch welche die mit den Blockelementen (5) beladenen Rahmen (7) mit den Transportmitteln auf die Laufbahnen (11) gezogen und auf diesen so geführt werden, dass die Rahmen (7) berührungslos über die feststehenden, Magnetschienen (12) und Magnetbogen (13) bewegbar sind.

8. Giessmaschine (1) nach einem der Ansprüche 4 bis 7, **dadurch gekennzeichnet, dass** über die Breite der Giessform mehrere Transportmittel, vorzugsweise Ketten (20) angeordnet sind, deren laterale Distanz ("i") voneinander so bemessen ist, dass eine unzulässige Durchbiegung der auf den Transportmitteln sitzenden Rahmen (7) und damit der über die Breite der Giessform reichenden, zusammengesetzten Blöcken (4) vermieden wird, womit infolge der nur geringen Deformation der Blockelemente (5) und deren Beibehaltung der planaren Position in den Rahmen (7) die Wände der Giessform, unabhängig von deren Länge und Breite und der Erwärmung der Blöcke (4), praktisch eben bleiben.

9. Giessmaschine (1) nach einem der Ansprüche 4 bis 8, **dadurch gekennzeichnet, dass** die Blöcke (4) auf mindestens einem Teil der Oberseite der Maschinenkörper frei auf den Transportmitteln (20) sitzen und beim Auswechseln mittels eines mit geeigneter Greifvorrichtung versehenen Hebezeuges ohne zusätzlichen Zeit- und Arbeitsaufwand abhebbar oder aufsetzbar sind.

10. Giessmaschine (1) nach einem der Ansprüche 4 bis 9, **dadurch gekennzeichnet, dass** die Rahmen (7) aus ferromagnetischem Material bestehen.

11. Giessmaschine (1) nach einem der Ansprüche 4 bis 10, **dadurch gekennzeichnet, dass** die Transportmittel Ketten (20) sind.

12. Giessmaschine (1) nach einem der Ansprüche 4 bis 11, **dadurch gekennzeichnet, dass** die Transportmittel mit Rollen (10) versehen sind.

13. Giessmaschine (1) nach einem der Ansprüche 4 bis 12, **dadurch gekennzeichnet, dass** die Länge der Blockelemente (5) in lateraler Richtung höchstens 25 cm ("h") beträgt.

14. Giessmaschine (1) nach einem der Ansprüche 4 bis 13, **dadurch gekennzeichnet, dass** die Distanz zwischen den die Rahmen (7) tragenden Transportmitteln höchstens 30 cm ("i") beträgt.

15. Giessmaschine (1) nach einem der Ansprüche 4 bis 14, **dadurch gekennzeichnet, dass** sie eine horizontale oder leicht geneigter Giessrichtung aufweist und eine untere Giessraupe (3) und eine obere Giessraupe (2) umfasst, wobei die untere Giessraupe (3) eine Länge ("k") aufweist und die obere Giessraupe (2) eine kleinere Länge ("l) aufweist und so angeordnet ist, dass die untere Giessraupe (3) auf der Austrittseite der Giessform über die obere Giessraupe (2) hinausragt, womit auch die auf der unteren Giessraupe (3) befindlichen Blöcke (4) analog zu den auf der oberen Giessraupe (2) ohne Behinderung auswechselbar sind, indem diese schrittweise auf die Verlängerung bringbar sind.

16. Giessmaschine (1) nach einem der Ansprüche 4 bis 15, **dadurch gekennzeichnet, dass**
a) die zwei Giessraupen (2;3) je zwei Wellen (29a;29b;29c;29d) mit konzentrisch fixierten Kettenrädern (30) umfassen; wobei
b) die Magnetbogen (13) mittels Gleit- oder Wälzlagern (28) auf den rotierenden Wellen (29) der Kettenräder (30) positioniert sind, womit die erforderliche Konzentrizität der Magnetbogen (13) mit der Laufbahn (11) der Transportmittel sowie die erforderliche genaue Position dieser Teile in bezug auf die Maschinenkörper gewährleistet ist.

17. Giessmaschine (1) nach Anspruch 15 oder 16, **dadurch gekennzeichnet, dass** auf dem über der oberen Giessraupe (2) hinausragenden Teil der unteren Giessraupe (3) eine Sekundärkühlung des Gussproduktes vorhanden ist, welche bei einem Wechseln der Blöcke (4) entfernbar ist.

18. Giessmaschine (1) nach einem der Ansprüche 4 bis 17, **dadurch gekennzeichnet, dass** die Blöcke (4) eine gegen die Laufbahnen (11) gerichtete Rückseite aufweisen und dass eine Kühlungsvorrichtung für diese Rückseite der Blöcke (4) vorgesehen ist.

19. Giessmaschine (1) nach einem der Ansprüche 4 bis 18, **dadurch gekennzeichnet, dass** die Blöcke (4) eine die Wand der Giessform bildende Vorderseite aufweisen, welche mit einer wärmeisolierenden Schutzschicht, vorzugsweise aus keramischem Material versehen wird.

20. Giessmaschine (1) nach einem der Ansprüche 4 bis 19, **dadurch gekennzeichnet, dass** die Blöcke (4) eine die Wand der Giessform bildende Vorderseite aufweisen, welche mit einer verschleissfesten Schutzschicht, vorzugsweise aus keramischem Material versehen wird.

21. Giessmaschine (1) nach einem der Ansprüche 4 bis 20, **dadurch gekennzeichnet, dass** die Blöcke (4) eine die Wand der Giessform bildende Vorderseite aufweisen, welche mit einer Folie aus Titan oder Stahl, bzw. deren Legierungen - vorzugsweise von weniger als 0,5 mm Dicke - versehen wird.

22. Giessmaschine (1) nach einem der Ansprüche 3 bis 20, **dadurch gekennzeichnet, dass** eine Kühlvorrichtung für die Blöcke (4) vorgesehen ist, welche eine Mehrzahl von Düsen (9) umfasst, welche so gerichtet sind, dass den Blöcken (4) mittels der Kühlmittelstrahlen (34) ein Impuls in, oder gegen die Giessrichtung erteilt wird, um damit bei der durch den Giessprozess gegebenen, günstigsten Giessrichtung die Schliesskraft zwischen den aufeinanderfolgenden Blockreihen zu optimieren.

23. Giessmaschine (1) nach einem der Ansprüche 4 bis 22, **dadurch gekennzeichnet, dass** sie einen Antrieb für die Blöcke (4) umfasst, welcher an der oberen Giessraupe (2) auf der Austrittseite (19b) der Giessform erfolgt, wobei der Welle (29a) auf der Eintrittseite (19a) ein Drehmoment entgegen der Laufrichtung erteilt wird.

24. Giessmaschine (1) nach einem der Ansprüche 16 bis 23, **dadurch gekennzeichnet, dass** sie einen Antrieb für die Blöcke (1) umfasst, welcher der unteren Giessraupe (3) auf der Eintrittseite (19a) der Giessform erfolgt und der auf der Austrittseite (19b) angeordneten Welle (29d) mit den darauf sitzenden Kettenrädern (30) ein angemessenes Gegendrehmoment erteilt wird, so dass sich die Blockreihen im Bereich der Giessform stossen und **dadurch** aufeinander aufliegen.

25. Giessmaschine (1) nach einem der Ansprüche 11 bis 14, **dadurch gekennzeichnet, dass** jede Kette (20) mittels Gelenken verbundene Kettenglieder (26) aufweist, wobei die Gelenke in der Längsrichtung ein Spiel aufweisen, so dass sich die Teilung der Ketten (20) der Dimension der kalten wie auch der sich beim Durchlaufen der Giessform erwärmenden Blöcke (4) und der Verzahnung der Kettenräder (30) anpassen kann.

26. Giessmaschine (1) nach einem der Ansprüche 4 bis 25, **dadurch gekennzeichnet, dass** die Blöcke (4) in den Rahmen (7) versetzt angeordnet sind, so dass ein zwischen den Blöcken (4) entstehender Zwischenraum überdeckt und damit ein Durchfluss von Kühlflüssigkeit auf die die Wand der Giessform bildende Vorderseite der Blöcke (4) verhindert wird.

27. Giessmaschine (1) nach einem der Ansprüche 25 oder 26, **dadurch gekennzeichnet, dass** die Kettenglieder (26) eine Verzahnung aufweisen, welche in die Rahmen (7) der Blöcke (4) greift, womit deren Position auf den zirkulierenden Transportmitteln bestimmt und gesichert ist.

28. Verfahren zum Auswechseln der Blöcke (4) einer Giessmaschine nach einem der Ansprüche 4 bis 27, **dadurch gekennzeichnet, dass** eine an einem Hebezeug hängende, auf der Unterseite mit Dichtungen versehene, mit einem Vakuumsystem verbundene Platte auf die auszuwechselnden Blöcke (4) gesenkt wird, danach das Vakuumsystem aktiviert wird, so dass die Blöcke (4) an der Platte festgesaugt und mittels des Hebezeuges ausgewechselt werden.

## Claims

1. A caterpillar casting method for a continuous fabrication of billets and bands of metallic or non-metallic materials whereby it is carried out in a casting mould which is formed by blocks (4) which circulate caterpillar-like on a transport means around a casting caterpillar (2;3), **characterised in that** they are held at least on a portion t of the circulation path U, where they would fall off said transport means due to gravity, on said transport means by means of stationarily fixed magnets.

2. A casting method as claimed in claim 1, **characterised in that** the mould comprises an upper and a lower casting caterpillar (2;3).

3. A casting method as claimed in claim 1 or 2, **characterised in that** the ratio between the portion t on which the blocks (4)are held on the transport means by means of stationary magnets and the total circulation path U of the at least one casting caterpillar (2;3), t : U, is between 0.55 and 0.95.

4. A casting machine (1) for carrying out the method as claimed in one of claims 1 to 3, whereby at least one wall of the casting mould consists of blocks (4) which circulate caterpillar-like around at least one casting caterpillar (2;3), **characterized in that** the blocks (4) lay loosely on a transport means, preferably a chain (20), so that upon temperature changes they may freely deform in all directions, said blocks (4) being pulled at least on a portion of the circulation path of the at least one casting caterpillar (2;3) by means of stationary magnets against the tracks (31) and are guided by the transport means so that the blocks (4) are movable in a contactless manner over the stationary magnets.

5. A casting machine (1) as claimed in claim 4, **characterised in that** the magnets are permanent magnets or preferably electromagnets.

6. A casting machine (1) as claimed in claim 5, **characterised in that** as magnets a number of separate magnets are provided.

7. A casting machine (1) as claimed in any of the claims 4 to 6, **characterised in that**
A) the blocks (4) extending over the width of the mould consist, in the lateral direction, of several block elements (5) which are positioned in frames made of a ferromagnetic material (7) and are preferably held together by means of drawbars (16) provided with tension springs (15) in such a way that, upon temperature changes occurring during the casting process, they may be freely deformed;
B) the blocks (4) put together by means of the frames (7) rest on the casting caterpillars (2;3) as a unit and without any mechanical fixation,
C) at least one stationary magnetic rail (12) being arranged between the tracks (11) of the transport means and the bottom surface of the at least one casting caterpillar (2;3) and at least one stationary magnetic bow (13) being arranged on the entry side and on the exit side (19a;19b) of the mould, by which the frames (7) carrying the block elements (5) are pulled onto the tracks (11) by means of the transport means and are guided thereon in such a way that the frames (7) are movable in a contactless manner over the stationary magnetic rails (12) and magnetic bows (13).

8. A casting machine (1) as claimed in any of the claims 4 to 7, **characterised in that** over the width of the mould several transport means, preferably chains (20) are arranged, the lateral distance ("j") therebetween being such that any undue bending of the frames (7) placed on the transport means and thus of the composite blocks (4) extending over the width of the mould is avoided, so that due to the low degree of deformation of the block elements (5) and to their maintained, planar position within the frames (7) the walls of the mould, disregarding its length and its width, remain practically even, in spite of the heating of the blocks (4).

9. A casting machine (1) as claimed in any of the claims 4 to 8, **characterised in that** at least on a portion of the top surface of the machine bodies the blocks (4) lie free on the transport means (20) and can be removed and replaced without any additional expenditure in time and labour in the course of an exchange operation carried out by means of a hoisting equipment provided with an adequate gripper.

10. A casting machine (1) as claimed in any of the claims 4 to 9, **characterised in that** the frames (7) are made of a ferromagnetic material.

11. A casting machine (1) as claimed in any of the claims 4 to 10, **characterised in that** the transport means are chains (20).

12. A casting machine (1) as claimed in any of the claims 4 to 11, **characterised in that** the transport means are provided with rollers (10).

13. A casting machine (1) as claimed in any of the claims 4 to 12, **characterised in that** the length of the block elements (5), as measured in the lateral direction, is 25 cm ("h") at the most.

14. A casting machine (1) as claimed in any of the claims 4 to 13, **characterised in that** the distance between the transport means carrying the frames (7) is 30 cm ("j") at the most.

15. A casting machine (1) as claimed in any of the claims 4 to 14, **characterised in that** it has a horizontal or a slightly inclined casting direction and comprises a lower casting caterpillar (3) and an upper casting caterpillar (2), the lower casting caterpillar (3) having a length ("k") and the upper casting caterpillar (2) having a shorter length ("I") and being disposed in such a way that at the exit side of the mould, the lower casting caterpillar (3) juts out with respect to the upper casting caterpillar (2), thus making it possible to exchange also the blocks (4) of the lower casting caterpillar (3) in an analogous manner to those of the upper casting caterpillar (2) without any hindrance by gradually moving them onto said extended portion.

16. A casting machine (1) as claimed in any of the claims 4 to 15, **characterised in that**
a) the two casting caterpillars (2;3) each comprise two shafts (29a;29b;29c;29d) having concentrically fixed chain wheels (30);
b) the magnetic bows (13) being positioned by means of plain bearings or rolling bearings (28) on the rotating shafts (29) of the chain wheels (30), which makes it possible to ensure the required concentricity of the magnetic bows (13) with the track (11) of the transport means, as well as the precise position of these parts with respect to the machine bodies.

17. A casting machine (1) as claimed in claim 15 or 16, **characterised in that** on the portion of the lower casting caterpillar (3) jutting out with respect to the upper casting caterpillar (2), a secondary cooling appliance for the cast product is provided which can be removed when the blocks (4) are changed.

18. A casting machine (1) as claimed in any of the claims 4 to 17, **characterised in that** the blocks (4) have a rear surface facing the tracks (11) and that a cooling appliance for said rear surface of the blocks (4) is provided.

19. A casting machine (1) as claimed in any of the claims 4 to 18, **characterised in that** the blocks (4) have a front surface which forms the wall of the mould and which is provided with a heat-insulating protective layer, preferably made of a ceramic material.

20. A casting machine (1) as claimed in any of the claims 4 to 19, **characterised in that** the blocks (4) have a front surface which forms the wall of the mould and which is provided with a wear-resistant protective layer, preferably made of a ceramic material.

21. A casting machine (1) as claimed in any of the claims 4 to 20, **characterised in that** the blocks (4) have a front surface which forms the wall of the mould and which is provided with a film made of titanium or steel and/or its alloys, preferably with a thickness of less than 0.5 mm.

22. A casting machine (1) as claimed in any of the claims 3 to 20, **characterised in that** a cooling appliance for the blocks (4) is provided which comprises a plurality of nozzles (9) that are oriented in such a way that the coolant jets (34) impart an impulsion in, or if necessary against, the casting direction to the blocks (4), depending on the most advantageous casting direction, which is imposed by the type of casting process used, in order to optimise in this way the clamping force between the successive rows of blocks.

23. A casting machine (1) as claimed in any of the claims 4 to 22, **characterised in that** it comprises a drive for the blocks (4) which is provided on the upper casting caterpillar (2) on the exit side (19b) of the mould, an angular momentum against the direction of rotation being imparted to the shaft (29a) on the entry side (19a).

24. A casting machine (1) as claimed in any of the claims 16 to 23, **characterised in that** it comprises a drive for the blocks (4) which is provided on the lower casting caterpillar (3) on the entry side (19a) of the mould and that an adequate antitorque moment is imparted to the shaft (29d) disposed on the exit side (19b) and supporting the chain wheels (30), so that in the region of the mould the block rows abut on each other and thus come to lie tightly against one another.

25. A casting machine (1) as claimed in any of the claims 11 to 14, **characterised in that** each chain (20) has chain links (26) connected to one another by means of joints, said joints being provided with a clearance extending in the longitudinal direction so that the pitch of the chains (20) may adapt itself to the dimensions of the blocks (4), both in their cold state and in their heated condition on passing through the mould, and to the toothing of the chain wheels (30).

26. A casting machine (1) as claimed in any of the claims 4 to 25, **characterised in that** the blocks (4) are offset in their frames (7), so that any interspace arising between the blocks (4) is bridged, and thus the coolant will be prevented from passing onto the front surface of the blocks (4) forming the wall of the mould.

27. A casting machine (1) as claimed in any of the claims 25 or 26, **characterised in that** the chain links (26) have a toothing which engages with the frames (7) of the blocks (4) so that the position of the latter on the circulating transport means is defined and secured.

28. A method of exchanging the blocks (4) of a casting machine as claimed in any of the claims 4 to 27, **characterised in that** a plate suspended on a hoisting equipment, provided on its bottom surface with sealings and connected to a vacuum system is let down on the blocks (4) to be exchanged, whereupon the vacuum system is activated so that the blocks (4) are aspirated by the plate and can thus be replaced in a small fraction of the expenditure in time and labour which has so far been necessary for this operation.

## Revendications

1. Procédé de coulée sur chenille pour produire en continu des barres ou des feuillards de matériaux métalliques ou non métalliques, lequel procédé est réalisé dans un moule, lequel est formé par des blocs (4), lesquels circulent à la manière d'une chenille sur un moyen de transport autour d'une chenille de coulée (2 ; 3), **caractérisé en ce que**, sur au moins une partie t de la trajectoire U, où ils risqueraient de tomber du moyen de transport à cause de la force gravitationnelle, ils sont retenus au moyen d'aimants fixés de manière stationnaire sur le moyen de transport.

2. Procédé de coulée selon la revendication 1, **caractérisé en ce que** le moule comprend une chenille de coulée supérieure et une inférieure (2 ; 3).

3. Procédé de coulée selon la revendication 1 ou 2, **caractérisé en ce que** le rapport de la partie t, sur laquelle les blocs (4) sont retenus au moyen d'aimants stationnaires sur le moyen de transport, à la trajectoire totale U de la au moins une chenille de coulée (2 ; 3) t:U est compris entre 0,55 et 0,95.

4. Machine de coulée (1) pour réaliser le procédé selon l'une quelconque des revendications 1 à 3, dans laquelle au moins une paroi du moule se compose de blocs (4), lesquels circulent à la manière d'une chenille autour d'au moins une chenille de coulée (2 ; 3), **caractérisée en ce que** les blocs (4) reposent de manière lâche sur un moyen de transport, de préférence une chaîne (20), de sorte qu'ils peuvent se déformer librement dans toutes les directions lors de changements de température, dans laquelle ils sont attirés sur au moins une partie de la trajectoire de la au moins une chenille de coulée (2 ; 3) au moyen d'aimants stationnaires contre les glissières (31) et sont conduits par le moyen de transport de sorte que les blocs (4) peuvent être déplacés sans contact sur les aimants stationnaires.

5. Machine de coulée (1) selon la revendication 4, **caractérisée en ce que** les aimants sont des aimants permanents ou, de préférence, des électroaimants.

6. Machine de coulée (1) selon la revendication 5, **caractérisée en ce qu'**un certain nombre d'aimants séparés sont prévus en tant qu'aimants.

7. Machine de coulée (1) selon l'une quelconque des revendications 4 à 6, **caractérisée en ce que**
A) les blocs (4) s'étendant sur la largeur du moule se composent, dans le sens latéral, de plusieurs éléments de bloc (5), lesquels sont positionnés dans des châssis faits d'un matériau ferromagnétique (7) et sont de préférence maintenus ensemble au moyen tiges de traction (16) présentant des ressorts de tension (15), dans laquelle ils peuvent se déformer librement lors des changements de température survenant pendant le processus de coulée ;
B) les blocs (4) maintenus ensemble au moyen des châssis (7), en tant qu'unité, reposent sans fixation mécanique sur les chenilles de coulée (2 ; 3), dans laquelle
C) au moins un rail magnétique stationnaire (12) entre les glissières (11) des moyens de transport sur la face inférieure de la au moins une chenille de coulée (2 ; 3) et au moins un arc magnétique (13) sur les côtés d'entrée et de sortie (19a ; 19b) du moule sont présents, lesquels permettent d'attirer les châssis (7) chargés avec les éléments de bloc (5) à l'aide des moyens de transport sur les glissières (11) et de les amener sur celles-ci de manière à ce que les châssis (7) puissent être déplacés sans contact sur les rails magnétiques (12) et les arcs magnétiques (13) stationnaires.

8. Machine de coulée (1) selon l'une quelconque des revendications 4 à 7, **caractérisée en ce que** plusieurs moyens de transport, de préférence des chaînes (20), sont disposés sur la largeur du moule, la distance latérale ("i") qui les sépare étant mesurée de manière à éviter une flexion inacceptable des châssis (7) reposant sur les moyens de transport et donc des blocs (4) maintenus ensemble, s'étendant sur la largeur du moule, si bien qu'en raison de la déformation seulement faible des éléments de bloc (5) et de la conservation de leur position planaire dans les châssis (7), les parois du moule, quelle que soit sa longueur et sa largeur et l'échauffement des blocs (4), restent pratiquement planes.

9. Machine de coulée (1) selon l'une quelconque des revendications 4 à 8, **caractérisée en ce que** les blocs (4) reposent librement sur les moyens de transport (20) sur au moins une partie de la face supérieure du corps de machine et, pour leur remplacement, peuvent être soulevés ou déposés au moyen d'un appareil de levage pourvu d'un dispositif de prise approprié sans que cela ne requière plus de temps ou de travail.

10. Machine de coulée (1) selon l'une quelconque des revendications 4 à 9, **caractérisée en ce que** les châssis (7) se composent d'un matériau ferromagnétique.

11. Machine de coulée (1) selon l'une quelconque des revendications 4 à 10, **caractérisée en ce que** les moyens de transport sont des chaînes (20).

12. Machine de coulée (1) selon l'une quelconque des revendications 4 à 11, **caractérisée en ce que** les moyens de transport sont pourvus de rouleaux (10).

13. Machine de coulée (1) selon l'une quelconque des revendications 4 à 12, **caractérisée en ce que** la longueur des éléments de bloc (5) dans le sens latéral est d'au maximum 25 cm ("h").

14. Machine de coulée (1) selon l'une quelconque des revendications 4 à 13, **caractérisée en ce que** la distance entre les moyens de transport portant les châssis (7) est d'au maximum 30 cm ("i").

15. Machine de coulée (1) selon l'une quelconque des revendications 4 à 14, **caractérisée en ce qu'**elle présente une direction de coulée horizontale ou légèrement inclinée et **en ce qu'**elle comprend une chenille de coulée inférieure (3) et une chenille de coulée supérieure (2), dans laquelle la chenille de coulée inférieure (3) présente une longueur ("k") et la chenille de coulée supérieure (2) présente une plus petite longueur ("I") et est disposée de manière à ce que la chenille de coulée inférieure (3) dépasse du côté de la sortie du moule sur la chenille de coulée supérieure (2), si bien que les blocs (4) se trouvant sur la chenille de coulée inférieure (3) peuvent être remplacés sans problème de manière analogue à ceux qui se trouvent sur la chenille de coulée supérieure (2) **en ce qu'**ils peuvent être mis en place progressivement sur le prolongement.

16. Machine de coulée (1) selon l'une quelconque des revendications 4 à 15, **caractérisée en ce que**
a) les deux chenilles de coulée (2 ; 3) comprennent chacune deux arbres (29a ; 29b ; 29c ; 29d) ayant des pignons de chaîne (30) fixés de manière concentrique ; dans laquelle
b) les arcs magnétiques (13) sont positionnés au moyen de paliers à glissement ou à roulement (28) sur les arbres rotatifs (29) des pignons de chaîne (30), si bien que la concentricité nécessaire des arcs magnétiques (13) avec la glissière (11) des moyens de transport ainsi que la position précise nécessaire de ces éléments par rapport au corps de machine sont garanties.

17. Machine de coulée (1) selon la revendication 15 ou 16, **caractérisée en ce qu'**un refroidissement secondaire du produit de coulée est présent sur la partie de la chenille de coulée inférieure (3) dépassant de la chenille de coulée supérieure (2), lequel refroidissement peut être retiré lors d'un remplacement des blocs (4).

18. Machine de coulée (1) selon l'une quelconque des revendications 4 à 17, **caractérisée en ce que** les blocs (4) présentent une face arrière tournée vers les glissières (11) et **en ce qu'**un dispositif de refroidissement pour cette face arrière des blocs (4) est prévu.

19. Machine de coulée (1) selon l'une quelconque des revendications 4 à 18, **caractérisée en ce que** les blocs (4) présentent une face avant formant la paroi du moule, laquelle face avant est pourvue d'une couche protectrice thermo-isolante, faite de préférence d'une matière céramique.

20. Machine de coulée (1) selon l'une quelconque des revendications 4 à 19, **caractérisée en ce que** les blocs (4) présentent une face avant formant la paroi du moule, laquelle face avant est pourvue d'une couche protectrice résistant à l'usure, faite de préférence d'une matière céramique.

21. Machine de coulée (1) selon l'une quelconque des revendications 4 à 20, **caractérisée en ce que** les blocs (4) présentent une face avant formant la paroi du moule, laquelle face avant est pourvue d'une feuille de titane ou d'acier ou d'alliages de ceux-ci, dont l'épaisseur est de préférence inférieure à 0,5 mm.

22. Machine de coulée (1) selon l'une quelconque des revendications 3 à 20, **caractérisée en ce qu'**un dispositif de refroidissement pour les blocs (4) est prévu, lequel comprend une pluralité de buses (9) qui sont orientées de manière à appliquer une contrainte, dans ou contre la direction de coulée aux blocs (4), au moyen des jets de réfrigérant (34), pour optimiser ainsi la mise en contact entre les rangées de blocs successives dans la direction de la coulée avantageuse donnée par le processus de coulée.

23. Machine de coulée (1) selon l'une quelconque des revendications 4 à 22, **caractérisée en ce qu'**elle comprend un entraînement des blocs (4), lequel est exercé au niveau de la chenille de coulée supérieure (2) du côté de la sortie (19b) du moule, dans laquelle un couple de rotation est exercé, dans le sens inverse du sens de déplacement, sur l'arbre (29a) du côté de l'entrée (19a).

24. Machine de coulée (1) selon l'une quelconque des revendications 16 à 23, **caractérisée en ce qu'**elle comprend un entraînement des blocs (4), lequel est exercé au niveau de la chenille de coulée inférieure (3) du côté de l'entrée (19a) du moule et un couple de rotation en sens inverse approprié est exercé sur l'arbre (29d) disposé du côté de la sortie (19b) par l'intermédiaire des pignons de chaîne (30) placés sur celui-ci, de sorte que les rangées de blocs se rejoignent dans la zone du moule et se retrouvent ainsi les unes en contact avec les autres.

25. Machine de coulée (1) selon l'une quelconque des revendications 11 à 14, **caractérisée en ce que** chaque chaîne (20) présente des maillons (26) reliés par des articulations, dans laquelle les articulations présentent un jeu dans le sens longitudinal de sorte que le pas des chaînes (20) peut s'adapter à la dimension des blocs (4) froids tout comme à ceux chauffés lors du passage du moule, et à la denture des pignons de chaîne (30).

26. Machine de coulée (1) selon l'une quelconque des revendications 4 à 25, **caractérisée en ce que** les blocs (4) sont disposés en décalage dans les châssis (7), de sorte qu'un espace intermédiaire formé entre les blocs (4) est recouvert et qu'un écoulement de liquide réfrigérant sur la face avant des blocs (4) formant la paroi du moule est ainsi évité.

27. Machine de coulée (1) selon l'une quelconque des revendications 25 ou 26, **caractérisée en ce que** les maillons (26) présentent une denture, laquelle s'engrène dans les châssis (7) des blocs (4), si bien que leur position sur les moyens de transport en circulation est définie et bloquée.

28. Procédé de remplacement des blocs (4) d'une machine de coulée selon l'une quelconque des revendications 4 à 27, **caractérisé en ce qu'**une plaque suspendue à un appareil de levage, pourvue sur la face inférieure de garnitures, reliée à un système à vide, est descendue sur les blocs (4) à remplacer, après quoi le système à vide est activé de sorte que les blocs (4) sont aspirés sur la plaque et sont remplacés au moyen de l'appareil de levage.
